(19) Europäisches Patentamt
European Patent Office
Office européen des brevets

(11) **EP 4 354 184 A1**

(12) **DEMANDE DE BREVET EUROPEEN**

(43) Date de publication:
**17.04.2024 Bulletin 2024/16**

(21) Numéro de dépôt: **23202980.1**

(22) Date de dépôt: **11.10.2023**

(51) Classification Internationale des Brevets (IPC):
**G01T 1/167** (2006.01)     **G01T 1/36** (2006.01)

(52) Classification Coopérative des Brevets (CPC):
**G01T 1/169; G01T 1/167; G01T 1/362**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **13.10.2022 FR 2210553**

(71) Demandeur: **Commissariat à l'énergie atomique et aux énergies alternatives**
**75015 Paris (FR)**

(72) Inventeurs:
• **SALVADOR, Francisco**
 **38000 GRENOBLE (FR)**
• **MARCHAIS, Thomas**
 **38000 GRENOBLE (FR)**
• **PEROT, Bertrand**
 **38000 GRENOBLE (FR)**
• **ALLINEI, Pierre-Guy**
 **38000 GRENOBLE (FR)**

(74) Mandataire: **Brevalex**
**Tour Trinity**
**1 B Place de la Défense**
**92400 Courbevoie (FR)**

(54) **PROCEDE DE DETECTION D'UNE CONTAMINATION EN URANIUM ET ESTIMATION DE L'ENRICHISSEMENT 235U/238U PAR SPECTROMETRIE GAMMA BASSE RESOLUTION**

(57)     L'invention concerne un procédé de détection d'une contamination (8) en uranium artificiel d'un objet contenant de l'uranium naturel, comportant :

a) - le positionnement d'un scintillateur (4) sur l'objet à examiner,

b) - la réalisation d'au moins un spectre de rayonnement gamma émis par la surface à examiner,

c) - la sélection d'une 1ère région spectrale et d'une 2ème région spectrale dudit spectre de rayonnement gamma,

d) - la mesure d'un 1er taux de comptage net dans la 1ère région spectrale et d'un 2ème taux de comptage net dans la 2ème région spectrale,

e) - l'estimation de l'enrichissement en $^{235}$U artificiel sur la base du 1er taux de comptage net et du 2ème taux de comptage net.

[Fig. 1A]

FIG. 1A

EP 4 354 184 A1

**Description**

## DOMAINE TECHNIQUE ET ÉTAT DE LA TECHNIQUE ANTÉRIEURE

L'invention se situe dans le domaine de la détection rapide de contamination en uranium artificiel dans un objet, par exemple contenant de l'uranium naturel en équilibre séculaire ; ce peut être le cas par exemple d'une tache de contamination en uranium enrichi sur une paroi en béton. Par tache de contamination, on entend une contamination de surface pouvant aller d'une contamination ponctuelle (point chaud de quelques $cm^2$) à une contamination surfacique, plus étendue (plusieurs $m^2$). Une telle détection peut par exemple être réalisée lors du démantèlement et l'assainissement d'une installation nucléaire.

L'invention est applicable, par exemple, à toute installation de traitement d'uranium en démantèlement, où des contaminations d'uranium résiduel pourraient être présentes.

Par exemple, l'enrichissement de l'uranium peut permettre d'atteindre différents niveaux, allant d'un enrichissement bas (moins de 1 % en masse d'$^{235}U$) à très haut (plus de 90 % en masse d'$^{235}U$), destiné à différentes applications. Or le processus d'enrichissement de l'uranium naturel modifie les proportions d'$^{238}U$, $^{235}U$ et $^{234}U$, ce qui implique des variations sur leurs pourcentages d'activité selon le niveau d'enrichissement.

Ces activités induisent non seulement les émissions $\alpha$ propres à ces isotopes de l'uranium mais aussi les émissions $\gamma$ et $\beta$ de leurs descendants, issus des chaînes de filiation, comme le montre la figure publiée dans l'article https://fr.wikipedia.org/wiki/Uranium 238.

Si on considère maintenant une contamination en uranium artificiel plus ou moins enrichi présente sur ou dans un objet contenant de l'uranium naturel, on comprend que les différentes contributions ($\gamma$, $\alpha$ et $\beta$) de cette contamination se superposent à un bruit de fond ambiant (BDF) produit par les chaînes de filiation de l'uranium, du thorium et par le potassium, naturellement présents, par exemple, dans le béton des parois et sols de l'installation. On cherche à caractériser ce bruit de fond et à le prendre en compte dans les mesures du signal net de la tache de contamination en uranium. Parmi les objets concernés, on peut citer par exemple un tapis roulant, ou des échantillons ou des sacs de gravas (« big bag ») après décroutage d'une paroi contaminée, ou encore à des colis de déchets radioactifs uranifères (fûts, caissons, etc.).

Par exemple, dans le cadre de la détection et de la caractérisation de taches de contamination en uranium, l'invention permet de répondre à trois objectifs principaux :

- la vérification des seuils de déclassement imposés par les autorités de sûreté nucléaire, qui sont par exemple de l'ordre du Bq/$cm^2$,
- le contrôle rapide des surfaces ; par exemple, la surface totale à contrôler peut atteindre plusieurs centaines de milliers de $m^2$, ce qui impose la mise en place de techniques de mesure rapides de façon à contrôler la totalité des surfaces en un temps raisonnable ;
- l'estimation du niveau d'enrichissement en $^{235}U$ de la tache de contamination, ce qui donne des informations supplémentaires utiles, par exemple, pour la décontamination, la caractérisation et la gestion des déchets qu'elle engendre, comme leur orientation vers une filière de stockage appropriée.

Différentes techniques de mesure sont connues pour le contrôle de contamination, allant du comptage alpha et béta à la spectrométrie gamma haute et basse résolution.

Une première technique de détection peut être réalisée par comptage alpha, par exemple à l'aide de contaminamètres de type scintillateur ZnS(Ag).

Les avantages de ce type de technique sont les suivants :

- le nombre de particules alpha émises par une contamination en uranium est généralement plus important que le nombre de particules beta et encore plus important que le nombre de particules gamma. De ce fait, les temps de mesure nécessaires pour la détection d'une contamination par comptage alpha sont très courts ;

- le bruit de fond associé à un comptage de particules alpha émergeant du béton est faible, car seules les émissions en surface peuvent atteindre le détecteur en raison du faible parcours des particules alpha dans le béton, environ 20 $\mu$m ; ceci facilite l'identification d'une contamination surfacique en uranium ; selon une estimation expérimentale avec une source alpha surfacique posée sur un sol non contaminé, il contribue à moins de 1 % du comptage alpha d'une tache de contamination de quelques Bq/$cm^2$ ;

- il est possible de réaliser des détecteurs de grande surface (par exemple 1000 $cm^2$) à très faible coût.

Mais cette technique a des inconvénients :

- les particules alpha sont facilement arrêtées par la matière. En moyenne le parcours des particules alpha est d'environ 3 cm dans l'air et 20 $\mu$m dans le béton pour une énergie de 4,5 MeV (calcul SRIM). Le détecteur doit donc se trouver au plus proche de la surface contaminée pour détecter ces particules ;

- cette méthode dépend fortement de l'état de surface de l'objet. Par exemple, dans le cadre de la détection d'une contamination sur le sol d'une installation, la présence d'éventuelles poussières et aspérités du sol peuvent atténuer fortement ces rayonnements.

On connaît également la technique de détection par comptage bêta, par exemple à l'aide de scintillateurs au plastique PVT.

Les avantages de ce type de technique sont les suivants :

- le parcours des particules bêta dans la matière est plus important que celui des particules alpha, par exemple environ 1,5 mm dans le béton pour les particules bêta émises par le $^{234m}$Pa, dont l'énergie maximale est élevée : $E_{\beta\,max}$ = 2,269 MeV. Cette méthode sera donc plus efficace que la mesure alpha si la contamination se trouve en profondeur, jusqu'à quelques millimètres ;
- selon l'enrichissement en $^{235}$U de la contamination et le nombre de particules bêta émis par seconde, la mesure bêta peut s'avérer plus efficace que la mesure gamma.

Mais cette technique a, elle aussi, des inconvénients :

- en particulier, le nombre de bêta émis pour une contamination avec de l'uranium très enrichi décroît fortement. Par conséquent, les temps de mesure requis pour différencier le signal de contamination du bruit de fond deviennent très importants, il peut atteindre plusieurs heures pour détecter des niveaux de contamination de l'ordre du Bq/cm$^2$ ;
- de plus, la non sensibilité au-delà de profondeurs de l'ordre du mm pose problème pour détecter une contamination plus en profondeur ou pour l'analyse d'objets volumineux.

Au vu des avantages et inconvénients de chacune des techniques, il apparaît par exemple que le comptage alpha est la méthode la plus rapide parmi celles citées pour la détection d'une contamination surfacique sur une gamme d'enrichissements allant de moins de 1 % à plus de 90 %. Néanmoins, l'efficacité de celle-ci dépend fortement de l'état de surface de l'objet à caractériser, par exemple lorsqu'une contamination au sol est recouverte par une couche de poussière. Quant au comptage bêta, la contrainte liée à la propreté du sol est moins préoccupante mais la baisse considérable des taux d'émission bêta dans le cas d'enrichissements en $^{235}$U importants rallonge les temps de mesure de façon rédhibitoire. En outre, ces deux méthodes ne permettent pas de remonter à l'enrichissement en $^{235}$U de l'uranium présent au sein de la contamination.

On peut mettre en oeuvre des techniques de détection par spectrométrie gamma car elles sont beaucoup moins sensibles à la profondeur de contamination ou à la propreté et à l'état de surface de l'objet examiné, car les rayonnements gamma et X d'intérêt peuvent traverser plusieurs cm de béton ;

La spectrométrie gamma haute résolution avec un détecteur au germanium hyper pur (GeHP) permet une analyse fine des différentes raies du spectre gamma et de mesurer l'enrichissement $^{235}$U/$^{238}$U par des ratios d'intensité (ou de surface ou d'aire, de préférence nette) de certaines raies.

En revanche :

- les détecteurs GeHP sont très onéreux (environ un facteur 10 sur le prix) à volume (et donc efficacité) de détection similaire en comparaison aux détecteurs à scintillation de type NaI(TI);

- les temps de mesure requis pour obtenir un spectre gamma avec une incertitude statistique suffisamment faible sur les raies d'intérêt, permettant par exemple de détecter la contamination, de déterminer sa composition isotopique, voire même son profil en profondeur, sont trop importants pour envisager de mesurer de très grandes surfaces potentiellement contaminées sans multiplier le nombre de détecteurs GeHP, ce qui représenterait un coût prohibitif;

- ce type de détecteur nécessite un refroidissement à très basse température à l'azote liquide ce qui complique son exploitation in situ, hors laboratoire) ou avec un système électrique (cryogénérateur), ce qui en accroit le coût.

On connaît également la technique de détection par spectrométrie gamma basse résolution avec des scintillateurs de type NaI(TI).

Les avantages de ce type de technique sont les suivants :

- les temps de mesure requis sont relativement courts (quelques minutes) pour détecter une contamination de l'ordre du Bq/cm$^2$. Des scintillateurs NaI(TI) de grandes dimensions (par exemple : 1000 cm$^2$ de surface et 5 cm d'épaisseur) sont réalisables à un prix convenable, contrairement à des scintillateurs de meilleure résolution comme ceux à base de cristaux LaBr$_3$(Ce) ou CeBr$_3$, ou aux détecteurs semi-conducteurs GeHP de haute résolution évoqués précédemment.

Les inconvénients des scintillateurs NaI(TI) sont leur mauvaise résolution en énergie, qui ne permet pas la caractérisation fine d'une contamination (par exemple son profil en profondeur ou l'enrichissement en $^{235}$U) par l'analyse des raies gamma ou X classiquement réalisée en spectrométrie gamma (identification des radioéléments émetteurs grâce aux énergies des raies et de leurs activités grâce aux aires nettes des raies).

Il est possible cependant de caractériser l'uranium par bandes d'énergie avec un détecteur NaI(TI) tel que décrit dans les documents FR3104739 et WO2021122772. Dans ces documents, l'objectif de l'analyse par bandes d'énergie est l'estimation de la teneur en uranium naturel dans des échantillons de minerai d'uranium ou dans un puits de forage, c'est-à-dire avec une répartition de l'uranium naturel à mesurer dans tout le volume interrogé.

Le problème posé par la présente invention est au contraire de détecter et de déterminer l'enrichissement d'une faible contamination en uranium artificiel localisée sur ou dans (en profondeur) un volume épais, par exemple un volume de béton, contenant de l'uranium naturel induisant un bruit de fond important à soustraire.

Par ailleurs, la problématique dans les documents FR3104739 et WO2021122772 était de distinguer le signal gamma de l'uranium de celui de ses descendants dans ses chaînes radioactives naturelles pour tenir compte d'un éventuel déséquilibre uranium/radon dans les chaînes de filiation. La technique décrite dans ces documents ne permet pas de détecter une contamination en uranium artificiel dans un objet contenant de l'uranium naturel qui génère un bruit de fond.

Il se pose donc ici le problème de trouver un nouveau procédé et un nouveau dispositif permettant de mesurer ou d'évaluer une contamination résiduelle en uranium artificiel, en général de faible activité (avec par exemple un seuil de déclassement de l'ordre du Bq.cm$^{-2}$), dans un objet contenant de l'uranium naturel, par exemple en équilibre séculaire, et d'autres radioéléments naturels comme du $^{232}$Th en équilibre séculaire avec ses descendants et du $^{40}$K, par exemple dans une paroi en béton d'une installation d'enrichissement de l'uranium. Cette radioactivité naturelle crée un bruit de fond gamma à soustraire pour détecter et caractériser la contamination en uranium artificiel. On cherche, pour ce genre de mesure, à mettre en oeuvre une technique rapide, pour permettre par exemple l'analyse de la totalité des surfaces d'une installation dans une période de temps raisonnable en vue de leur déclassement.

L'article de I.Meleshenkovskii et al. (EuR.Phys.J.plus, 2018, 133, 554, DOI 10.1140) décrit un procédé basé sur l'utilisation d'un détecteur LaBr$_3$(Ce).

L'article de Dufour et al. (Nuclear inst. And Methods in Physics Research, A), 951, 162976, 2019) décrit un procédé basé sur l'utilisation d'un détecteur au Germanium.

**EXPOSÉ DE L'INVENTION**

Un procédé selon l'invention met en oeuvre une mesure des émissions gamma d'une contamination en uranium dans un objet contenant de l'uranium naturel, ou de l'uranium naturel en équilibre séculaire, par spectrométrie gamma basse résolution, par exemple un détecteur du type NaI(TI), de préférence de grand volume, par exemple entre 100 cm$^3$ (ou 0,11) et 1 l, et/ou avec une surface de détection importante, par exemple adaptée, ou correspondant, à la surface de la tâche de contamination, par exemple comprise entre 100 cm$^2$ et 1600 cm$^2$ (la largeur et la longueur du détecteur peuvent être comprises par exemple entre 10 cm et 40 cm ; sa profondeur est par exemple comprise entre 5 cm et 15 cm).

L'invention permet d'estimer la présence, ou non, d'une contamination en uranium dans un objet ainsi que l'enrichissement en $^{235}$U présent au sein de celui-ci.

L'invention concerne d'abord un procédé de détection d'une contamination en uranium artificiel d'un objet contenant de l'uranium naturel, ce procédé comportant :

a) - le positionnement d'au moins un scintillateur sur l'objet à examiner,
b) - la réalisation d'au moins un spectre de rayonnement gamma émis par l'objet à examiner,
c) - la sélection d'une région spectrale dudit spectre, cette région spectrale étant de préférence à basse énergie, par exemple comprise entre 50 keV et 220 keV, dudit spectre de rayonnement gamma,
d) - la mesure du taux de comptage, de préférence net, (sans bruit de fond, dans ladite région spectrale sur le spectre de gamma émis par l'objet contaminé.

L'invention concerne également un procédé de détection d'une contamination en uranium artificiel d'un objet contenant de l'uranium naturel, et/ou de l'estimation de l'enrichissement en $^{235}$U artificiel dudit objet, comportant :

a) - le positionnement d'un scintillateur, par exemple un détecteur NaI, sur ou contre l'objet à examiner,
b) - la réalisation d'au moins un spectre de rayonnement gamma émis par l'objet à examiner,
c) - la sélection d'une 1$^{ère}$ région spectrale et d'une 2$^{ème}$ région spectrale dudit spectre de rayonnement gamma,
d) - la détection d'un 1$^{er}$ taux de comptage net, sans bruit de fond, dans la 1$^{ère}$ région spectrale et d'un 2$^{ème}$ taux de comptage net, sans bruit de fond, dans la 2$^{ème}$ région spectrale,
e) - l'estimation de l'enrichissement en $^{235}$U artificiel sur la base du 1$^{er}$ taux de comptage net et du 2$^{ème}$ taux de comptage net, par exemple sur la base du rapport de ces deux taux de comptage.

L'invention propose donc un procédé de spectrométrie gamma avec un scintillateur, par exemple de type NaI(Tl), de préférence un grand scintillateur, pour réaliser une détection rapide de la contamination, moins sensible à l'état de surface de l'objet et à la profondeur de contamination que la détection alpha ou bêta, dont les rayonnements peuvent être masqués par de faibles épaisseurs de poussière, peinture, ciment, ou autre, qui recouvriraient les surfaces examinées.

Selon une réalisation, l'invention propose l'utilisation d'un détecteur NaI, bien que d'autres détecteurs, par exemple de type LaBr (utilisé dans l'article de Meleshenkovskii et al. (EuR.Phys.J.plus, 2018, 133, 554, DOI 10.1140) déjà cité ci-dessus), aient une meilleure résolution que le NaI. Mais un détecteur de type LaBr ne peut pas être réalisé dans des dimensions aussi grandes que le NaI et est dix fois plus cher à taille égale.

Pour identifier les zones contaminées, l'invention met en oeuvre une spectrométrie gamma de basse résolution en énergie, avec un scintillateur (ou détecteur à scintillation), par exemple avec un cristal NaI(Tl), plutôt qu'une spectrométrie de haute résolution avec un détecteur semi-conducteur au Ge, lequel est beaucoup plus petit et plus coûteux par unité de volume et nécessite un refroidissement à très basse température, par exemple à l'aide d'azote liquide. De plus, la spectrométrie gamma peut apporter une information sur l'enrichissement de l'uranium, information que ne peuvent apporter la détection alpha ou bêta.

Par ailleurs, des traitements connus (par exemple dans l'article de Dufour et al. mentionné ci-dessus) d'un spectre gamma réalisés avec des détecteurs Ge de haute résolution sont basés sur les pics gamma très fin de l'uranium et non sur des zones larges comme dans la présente invention (par exemple avec un détecteur NaI) ; de plus la soustraction du bruit de fond est basée sur une mesure préalable et indépendante du spectre de bruit de fond, alors que l'invention propose, selon un aspect, de l'estimer grâce au spectre gamma en cours de mesure, par exemple en utilisant un modèle d'apprentissage basé sur les comptages dans une ou plusieurs régions à plus haute énergie (que les deux zones d'intérêt).

La mesure par spectrométrie gamma basse résolution permet de résoudre les problèmes d'atténuation par l'environnement. Les rayonnements gamma étant peu atténués par exemple par le béton, ils peuvent être détectés même si la contamination se trouve à quelques millimètres ou même à quelques centimètres de profondeur.

De préférence, la 1$^{ère}$ région spectrale contient au moins une raie, par exemple à 93 keV, et la 2$^{ème}$ région spectrale contient au moins une autre raie, par exemple à 185 keV.

Les régions spectrales mises en oeuvre dans le cadre de l'invention peuvent être situées à basse énergie (par exemple entre 50 et 220 keV, pour la détection et l'estimation de l'enrichissement en $^{235}$U d'une contamination uranium. Pour l'enrichissement, l'estimation peut être basée sur un rapport des comptages dans deux sous bandes d'énergie, comprises dans la bande à basse énergie, ici entre 50 et 220 keV.

Par exemple, la 1$^{ère}$ région spectrale est située entre 50 keV et 130 keV et la 2$^{ème}$ région spectrale est située entre 165 keV et 215 keV.

Quelle que soit la réalisation de l'invention, le taux de comptage net peut être obtenu par différence entre le taux de comptage brut et le taux de comptage lié au bruit de fond, par exemple obtenu par mesure ou estimation de celui-ci, par exemple encore par la réalisation d'au moins un spectre de rayonnement gamma émis par un objet équivalent non contaminé.

Selon un mode de réalisation de l'invention, on peut donc estimer le bruit de fond de la mesure, dans au moins la 1$^{ère}$ région spectrale et la 2$^{ème}$ région spectrale, les taux de comptage net étant calculés en prenant en compte ce bruit de fond.

L'invention propose une estimation innovante du bruit de fond à partir des comptages dans une ou plusieurs régions à plus haute énergie que les zones d'intérêt, qui n'a rien à voir avec d'autres méthodes connues, par exemple basées sur un ajustement de gaussiennes sur les pics et sur une fonction en escalier, de type « step-like », pour le bruit de fond en dessous des pics (ce type de méthode est utilisé dans l'article de Meleshenkovskii et al. (EuR.Phys.J.plus, 2018, 133, 554, DOI 10.1140) déjà cité ci-dessus).

Selon un aspect, un procédé selon l'invention permet donc de distinguer entre, d'une part, le signal gamma de l'objet (par exemple un objet en béton) ou de sa surface et, d'autre part, le bruit de fond naturel de l'objet ou de sa surface, sur ou dans lequel ou laquelle la contamination est déposée ou introduite.

Selon une réalisation particulière, le bruit de fond peut être estimé à partir de plusieurs spectres gamma acquis sur des échantillons ou des objets non contaminés, une estimation étant par exemple obtenue par moyenne ou par régression, par exemple avec des méthodes d'apprentissage automatique telles que la régression multilinéaire par la méthode des moindres carrés.

Selon encore une autre réalisation particulière, le bruit de fond, dans au moins la 1ère région spectrale et la 2ème région spectrale, peut être estimé à partir de mesures dans une ou des régions à plus haute énergie que la 1ère région spectrale et la 2ème région spectrale, par exemple pour laquelle/lesquelles la contribution d'une possible contamination en uranium est nulle ou négligeable (inférieure à 1%).

Par exemple si la 1ère région spectrale contient au moins une raie à 93 keV et la 2ème région spectrale contient au moins une raie à 185 keV, ou si les régions spectrales mises en oeuvre dans le cadre de l'invention sont situées à basse énergie, par exemple encore entre 50 et 220 keV, le bruit de fond, dans au moins la 1ère région spectrale et la 2ème région spectrale, peut être estimé à partir de mesures dans une région spectrale comprise entre 550 keV à 660 keV et dans une région spectrale comprise entre de 1300 keV à 1600 keV.

Une estimation du pourcentage massique d'enrichissement $^{235}U/^{238}U$ peut être réalisée à partir des données d'indicateur d'enrichissement, par exemple à l'aide d'une courbe d'étalonnage.

Un procédé selon l'invention peut comporter une étape préalable de détection par comptage alpha et/ou beta, et/ou une étape additionnelle de détection gamma à haute résolution.

De manière avantageuse, un procédé selon l'invention peut comporter, pour une contamination faible ou nulle, une étape de mémorisation d'au moins une partie des données du spectre. Ces données peuvent être ensuite réutilisées pour élaborer des données de bruit de fond.

L'invention concerne également un dispositif de détection d'une contamination en uranium artificiel d'un objet contenant de l'uranium naturel, ce dispositif comportant :

a) - un scintillateur ;
b) - des moyens pour la réalisation d'au moins un spectre de rayonnement gamma émis par la surface de l'objet ou par l'objet à examiner,
c) - des moyens pour sélectionner une région spectrale dudit spectre, cette région spectrale étant de préférence à basse énergie, par exemple comprise entre 50 keV et 220 keV, dudit spectre de rayonnement gamma,
d) - des moyens, adaptés ou spécialement programmés, pour mesurer le taux de comptage, de préférence net (sans bruit de fond) dans ladite région spectrale sur le spectre de gamma émis par l'objet contaminé.

L'invention concerne également un dispositif de détection d'une contamination en uranium d'un objet contenant de l'uranium naturel, et/ou d'estimation de l'enrichissement en $^{235}U$ artificiel dudit objet, comportant :

a) - un scintillateur ;
b) - des moyens pour la réalisation d'au moins un spectre de rayonnement gamma émis par la surface de l'objet ou par l'objet à examiner,
c) - des moyens pour sélectionner une 1ère région spectrale et une 2ème région spectrale dudit spectre de rayonnement gamma,
d) - des moyens adaptés ou spécialement programmés pour effectuer la mesure d'un 1er taux de comptage net, sans bruit de fond, dans la 1ère région spectrale et d'un 2ème taux de comptage net, sans bruit de fond, dans la 2ème région spectrale,
e) - des moyens, adaptés ou spécialement programmés, pour estimer un indicateur d'enrichissement en $^{235}U$ sur la base du 1er taux de comptage et du 2ème taux de comptage.

L'invention concerne également un procédé mettant en oeuvre un tel dispositif.

Dans un procédé ou un dispositif selon l'invention, l'indicateur d'enrichissement peut être obtenu par calcul du rapport entre le 1er taux de comptage net et le 2ème taux de comptage net. Les taux de comptage nets sont obtenus après soustraction du bruit de fond dans chacune des régions spectrales concernées.

Dans un procédé ou un dispositif selon l'invention :

- le scintillateur est de préférence un détecteur Nal ;
- et/ou les 2 régions spectrales ($A_1$, $A_2$) ont des contributions différentes de l'$^{235}U$ et de l'$^{238}U$ ;
- et/ou la 1ère région spectrale contient au moins une raie à 93 keV et la 2ème région spectrale contient au moins une raie à 185 keV.
- et/ou la 1ère région spectrale est située entre 50 keV et 150 keV et la 2ème région spectrale est située entre 150 keV et 250 keV ;
- et/ou l'indicateur d'enrichissement peut être obtenu par calcul du rapport entre le 1er taux de comptage net et le

2<sup>ème</sup> taux de comptage net.

Un dispositif selon l'invention peut comporter en outre :

- des moyens pour réaliser une estimation du bruit de fond de la mesure, dans au moins la 1<sup>ère</sup> région spectrale et la 2<sup>ème</sup> région spectrale, et des moyens pour corriger les taux de comptages sur la base de cette estimation du bruit de fond ;
- et/ou des moyens de mémorisation de données de spectres gamma de surfaces non contaminées.

Un dispositif selon l'invention peut comporter en outre :

- un détecteur alpha et/ou bêta et des moyens pour mettre en oeuvre une étape préalable de détection par comptage alpha et/ou beta ;
- et/ou un détecteur gamma à haute résolution.

La technique mise en oeuvre selon l'invention n'utilise pas principalement de détecteurs à haute résolution, tel qu'un détecteur au germanium, lesquels nécessitent un système de refroidissement permanent ; de plus, la surface de détection de ce type d'appareil est limitée par la taille du cristal, et notamment du cristal Ge dans le cas d'un détecteur germanium. L'invention permet de s'affranchir de ce problème à un coût moindre puisque l'on peut réaliser des détecteurs à scintillation ayant une grande surface avec un ratio environ 10 fois plus grand entre l'efficacité et le prix, tout en pouvant les utiliser à température ambiante (pas de refroidissement).

On note que, dans l'article de Dufour et al. (Nuclear inst. And Methods in Physics Research, A), 951, 162976, 2019) cité ci-dessus, les traitements du spectre gamma réalisés avec le détecteur Ge de haute résolution sont basés sur les pics gamma très fin de l'uranium et non sur des zones larges comme selon un aspect de la présente invention.

Par ailleurs, la soustraction du bruit de fond décrite dans ce document de Dufour et al. est basée sur une mesure préalable et indépendante du spectre du bruit de fond, alors que, selon un aspect, la présente invention propose d'estimer le bruit de fond grâce au spectre gamma en cours de mesure, par exemple en utilisant un modèle d'apprentissage basé sur les comptages dans une ou plusieurs régions à plus haute énergie (que les deux zones d'intérêt).

De plus, ce document Dufour et al. utilise des régions spectrales uniquement pour étudier la variabilité du bruit de fond. Il met également en oeuvre une soustraction du signal de bruit de fond au signal de spectre, mais il s'agit d'une simple soustraction d'un spectre de bruit de fond mesuré séparément, et non basé sur le spectre en cours de mesure.

Enfin, si la région située entre 1004 et 3000 keV est mentionnée dans ce document, c'est juste pour vérifier que l'algorithme utilisé ne génère pas trop de fausse alarmes (voir page 8, colonne de droite, juste avant avant le §7).

## BRÈVE DESCRIPTION DES DESSINS

[FIG 1A] représente un exemple de réalisation d'une détection d'une contamination uranium avec un détecteur NaI ;
[FIG 1B] représente un exemple de réalisation d'une chaîne de mesure qui peut être mise en oeuvre dans le cadre de la présente invention ;
[FIG 2] représente des spectres gamma obtenus par simulation MCNP pour une contamination quasi-surfacique en uranium avec des enrichissements de 1 à 80 % et pour le BDF dû aux émissions gamma naturelles dans le volume du béton, avec un détecteur NaI(TI) de grand volume ;
[FIG 3] représente l'identification, dans un spectre gamma, des bandes d'énergie A1 (ici de 50 à 130 keV) et A2 (de 165 à 215 keV) ;
[FIG 4] représente l'évolution d'un indicateur $\alpha_{ENR}$ après correction du bruit de fond et en fonction du pourcentage massique d'enrichissement $^{235}U/^{238}U$ ;
[FIG 5] représente l'évolution d'un indicateur $\alpha_{ENR}$ sans soustraction du bruit de fond et en fonction du pourcentage massique d'enrichissement en $^{235}U$;
[FIG 6] représente des spectres correspondant à des mesures de bruit de fond effectuées sur une installation avec un détecteur NaI ;
[FIG 7] représente une comparaison des points calculés par le modèle de régression et des points expérimentaux ;
[FIG 8] représente des étapes d'un procédé selon l'invention, de détection d'une contamination uranium par un couplage des méthodes de mesure alpha, bêta et gamma ;
[FIG 9] représente des étapes d'un procédé selon l'invention, de détection d'une contamination uranium et d'estimation de son enrichissement $^{235}U/^{238}U$.
[FIG 10A] et [FIG 10B] représentent schématiquement des variantes d'un procédé selon l'invention.

**EXPOSÉ DÉTAILLÉ DE MODES DE RÉALISATION PARTICULIERS**

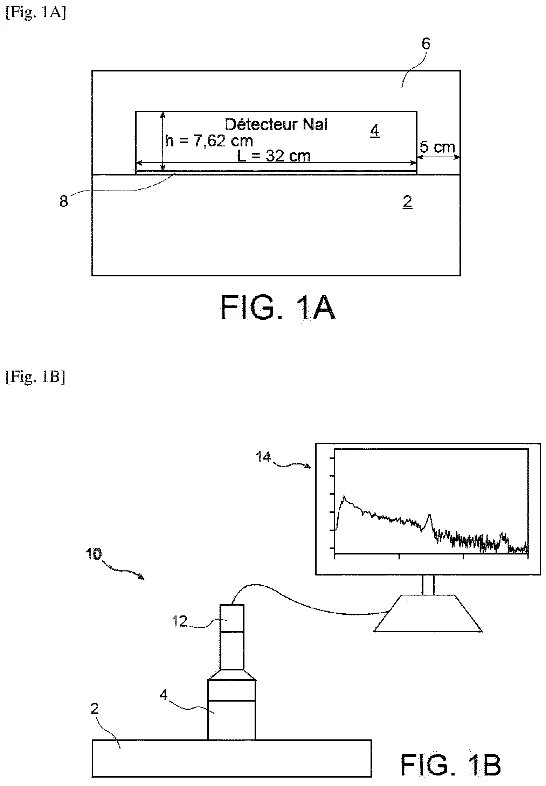

Un exemple de mise en oeuvre de l'invention est donné en figure 1A.

Il s'agit sur cette figure d'une détection sur une surface d'un bloc de béton 2, mais elle pourrait être également réalisée sur ou dans tout autre objet contaminé, comme des sols et/ou des murs d'un bâtiment. Le bloc 2 est par exemple de dimensions $100 \times 100 \times 30$ cm$^3$, pour une densité de 2,35. La référence 8 désigne une tache de contamination par de l'uranium artificiel, par exemple d'épaisseur 0,1 cm pour une surface de $32 \times 32$ cm$^2$. Le bloc 2, plus généralement l'objet sur ou dans lequel on souhaite faire une détection, et de préférence également une estimation de l'enrichissement, contient par ailleurs de l'uranium naturel, ou uranium naturel en équilibre radioactif séculaire.

Le guide méthodologique de l'ASN sur la « Gestion des sites potentiellement pollués par des substances radioactives »
https://www.asn.fr/l-asn-reglemente/guides-de-l-asn/guide-methodologique-gestion-des-sites-potentiellement-pollues-par-des-substances-radioactives
indique que, « lorsque la période du père est très nettement supérieure à celle des fils, les activités des différents fils se mettent à l'équilibre avec celle du père. Cet équilibre, dit séculaire, est obtenu après un temps égal à environ 10 fois la période du fils dont la période est la plus longue : 234U (T=2,46.10$^5$ ans) pour la chaîne de l'238U (T=4,47.10$^9$ ans) et 228Ra (T=5,75 ans) pour la chaîne du 232Th (T=1,40.10$^{10}$ ans). En considérant que toutes les activités sont alors égales, l'erreur commise est inférieure à 1‰ ».

La face d'entrée du détecteur 4 est donc déposée contre cette tâche. Plus généralement elle est déposée contre la surface de l'objet sur ou dans lequel on souhaite faire une détection ou une estimation, comme expliqué ci-dessus.

Ce détecteur 4 est un scintillateur, par exemple un détecteur NaI. Dans le cadre de la présente invention, on utilise un tel détecteur gamma, de basse résolution.

Il peut être d'un volume relativement important, par exemple il a ici une largeur L de 32 cm et une profondeur de 32 cm (toutes 2 mesurées parallèlement à la surface contre laquelle il est déposé) pour une hauteur h de 7,62 cm. La hauteur du détecteur, par exemple comprise entre 5 cm et 10 cm, est quant à elle liée à l'efficacité visée pour les rayonnements gamma à détecter, et à la limitation du phénomène de diffusion Compton responsable du continuum de bruit de fond observé sur les spectres gamma. Plus généralement, la largeur et la longueur du détecteur peuvent être comprises par exemple entre 10 cm et 40 cm, sa profondeur par exemple entre 5 cm et 15 cm, son volume global par exemple entre quelques centaines de cm$^3$ et plusieurs litres, par exemple entre d'une part 100 cm$^3$ (ou 0,1 l) ou 200 cm$^3$ (ou 0,2 l) et d'autre part 5 l ou 10 l.

De préférence, le détecteur est équipé d'un blindage 6, par exemple un blindage en plomb, par exemple encore d'épaisseur 5 cm. Ce blindage permet d'éviter les rayonnements gamma parasites. On peut noter que le bloc 2 de béton est émetteur de bruit de fond.

La figure 1B représente donc un détecteur 4 et la chaîne de mesure 10 à laquelle il est associé. Cette chaîne est composée d'une embase 12 HT/MCA (haute tension et analyseur multicanal, ou MCA pour *Multi-Channel Analyzer*) dont le rôle est d'alimenter le détecteur et de reconstruire le spectre à partir des signaux électriques produits par les rayonnements gamma détectés, ainsi que d'un ordinateur ou micro-ordinateur d'acquisition 14 programmé pour enregistrer et analyser les spectres gamma.

Les données mesurées peuvent être mémorisées dans la mémoire de l'ordinateur ou micro-ordinateur 14 à des fins de traitement selon la présente invention. Cet ordinateur ou ce micro-ordinateur est donc de préférence adapté ou programmé pour mettre en oeuvre une ou plusieurs des étapes décrites dans le cadre de la présente invention.

Dans les exemples présentés, les émetteurs gamma d'intérêt pour la détection de la contamination sont l'$^{238}$U, le $^{234}$Th, le $^{234m}$Pa, l'$^{235}$U et le $^{231}$Th avec des énergies d'émission essentiellement comprises dans une région de basse énergie A, par exemple comprise entre 50 keV et 220 keV.

Le tableau ci-dessous montre les principales émissions gamma des isotopes de l'uranium naturel ou enrichi ($^{238}$U, $^{235}$U, $^{234}$U), et de leurs descendants, après 40 ans d'évolution (données tirées de la base LARA, voir par exemple http://www.nucleide.org/Laraweb/index.php). L'incertitude sur le dernier chiffre est donnée entre parenthèses.

[Table 1]

| Isotope | Emetteurs gamma | Energies $\gamma$ (keV) | Intensités $\gamma$ (%) |
|---|---|---|---|
| **238U** | 238U | 49,55 (6) | 0,0697 (26) |
| | 234Th | 63,30 (2)<br>92,38 (1)<br>92,80 (2) | 3,75 (8)<br>2,18 (19)<br>2,15 (19) |
| | 234mPa | 766,361 (20)<br>1001,026 (18) | 0,323 (4)<br>0,847 (8) |
| **235U** | 235u | 185,720 (4)<br>143,767 (3)<br>163,356 (3)<br>205,316 (4) | 57,0 (3)<br>10,94 (6)<br>5,08 (3)<br>5,02 (3) |
| | 231Th | 25,64 (2)<br>84,2140 (13) | 13,9 (7)<br>6,70 (7) |
| **234U** | 234U | 53,20 (2) | 0,1253 (40) |

Comme on le voit de ce tableau, les taux de comptage dans la région à basse énergie A, par exemple comprise entre 50 et 220 keV (le taux de comptage est alors noté $C_{BRUT\ [50-220]}$) sont plus élevés lorsque l'on est en présence d'une contamination de pourcentage d'activité 238U important ; de ce fait, lorsque le signal de bruit de fond (BDF) sera pris en compte, la différence entre ce signal de BDF et le signal de contamination sera plus nette. De façon à vérifier cet écart, on a effectué plusieurs simulations MCNP (Monte Carlo N-Particle Transport Code, Los Alamos National Laboratory, « Monte Carlo N-Particle (MCNP) Transport Code », https://laws.lanl.gov/vhosts/mcnp.lanl.gov/index.shtml) selon la géométrie de la figure 1A. Les proportions d'activité 238U, 235U et 234U de la tache de contamination correspondent à différents enrichissements de 1 à 80 % en 235U, et elles varient respectivement de 40 à 0,1 % pour l'238U, de 2,6 % à 3,2 % pour l'235U et 57,4 % à 96,7 % pour l'234U.

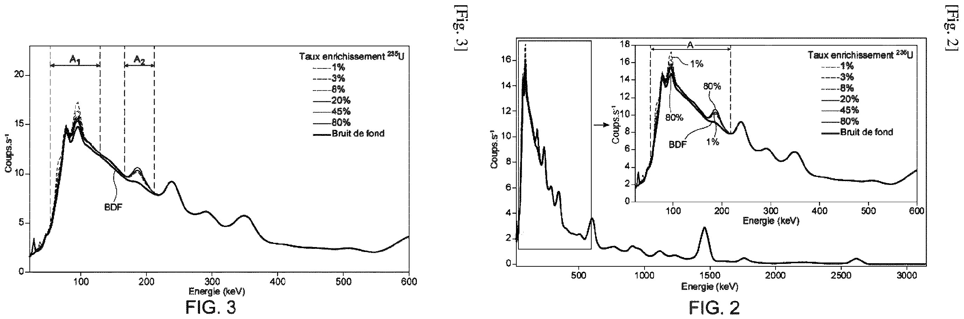

Les résultats de simulation dans le volume du détecteur 4 permettent de reconstruire (voir figure 2) les différents spectres gamma détectés, dus aux émissions du BDF dans le volume du béton 2 et dus à celles de la contamination surfacique 8. Sur cette figure 2, la région A, dans cet exemple allant de 50 à 220 keV, est celle qui contient le plus d'informations relatives à la contamination uranium, principalement par les raies à 63 et 92 keV du 234Th ainsi que la raie à 185 keV de l'235U.

Les différentes courbes de la figure 2, outre celle qui correspond au bruit de fond (BDF), correspondent à divers enrichissemments de 1 à 80 %. Globalement, ces résultats mettent en évidence que les spectres gamma correspondant aux enrichissements de 1 à 80 % affichent, dans la région A à basse énergie de 50 à 220 keV, des taux de comptage plus élevés que ceux du bruit de fond. L'écart entre les différents signaux de contamination et le signal de bruit de fond du béton pur permet donc de détecter et de quantifier la contamination, moyennant une estimation du bruit de fond et sa soustraction comme expliqué ci-dessous.

Ces résultats montrent qu'une contamination peut être détectée en établissant un spectre de rayonnement gamma émis par la surface, plus généralement par l'objet, à examiner.

Les temps de mesure estimés par simulation pour obtenir un spectre avec une incertitude statistique suffisamment faible pour détecter la contamination et estimer son enrichissement sont par exemple de l'ordre de la minute en spectrométrie gamma basse résolution avec le détecteur Nal(TI) parallélépipédique décrit ci-dessus (volume de de $32 \times 32 \times 7{,}62$ cm$^3$), pour un faible enrichissement de 1 % et un niveau de contamination de l'ordre du Bq/cm$^2$.

Une fois la contamination détectée, on peut séparer la région spectrale A d'intérêt en deux sous-bandes $A_1$ et $A_2$:

- la première ($A_1$) pouvant par exemple être située autour d'au moins une des 2 raies à 63 keV et à 92 keV (de préférence autour des 2 pour avoir plus de signal), région associée à l'238U avec une contribution de l'235U par l'émission X de conversion interne du 231Th à 93 keV; ici, cette sous-bande $A_1$ est située entre environ 50 keV et 130 keV ;

- la deuxième ($A_2$) est par exemple située autour de la raie à 185 keV, émise par l'235U ; ici, cette sous-bande $A_2$ est située entre environ 165 keV et 215 keV ;.

Selon l'invention, on peut donc sélectionner 2 plages d'énergie dans lequelles les contributions de l'235U et de

l'$^{238}$U sont différentes,les valeurs numériques des bornes de ces plages pouvant quant à elles faire l'objet de choix différents.

Dans chacune de ces 2 bandes, on obtient un taux de comptage brut C$^{BRUT}_{A1}$ et C$^{BRUT}_{A2}$. En soustrayant le bruit de fond associé à chacune des sous-bandes, C$^{BDF}_{A1}$ et C$^{BDF}_{A2}$, on peut établir un indicateur, noté α$_{ENR}$, permettant d'estimer l'enrichissement $^{235}$U/$^{238}$U (ratio massique) de la contamination :

[MATH 1]

$$\alpha_{ENR} = \frac{C^{NET}_{[165-215]}}{C^{NET}_{[50-130]}} = \frac{C^{BRUT}_{[165-215]} - C^{BDF}_{[165-215]}}{C^{BRUT}_{[50-130]} - C^{BDF}_{[50-130]}}$$

C$^{NET}_{A1}$ et C$^{NET}_{A2}$ étant les taux de comptage nets respectifs dans chacune des sous-bandes A$_1$ et A$_2$, après soustraction du bruit de fond dû au béton pur.

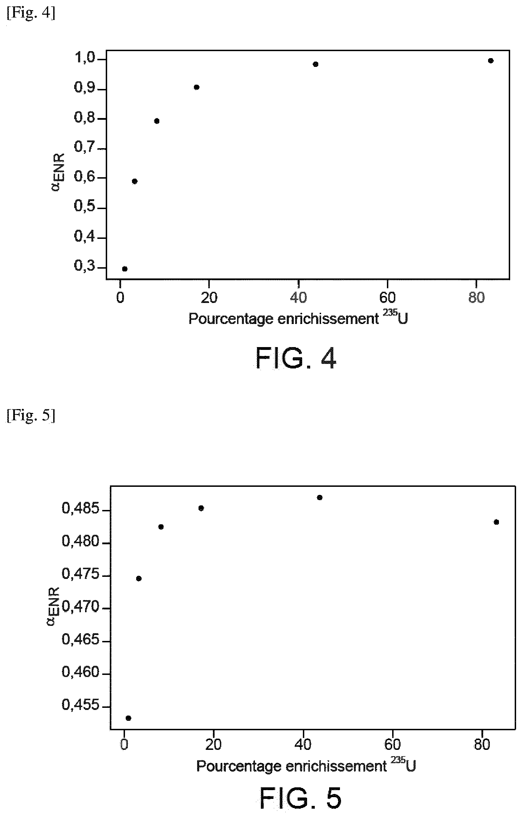

En se basant sur la simulation numérique, il est possible d'établir la relation entre cet indicateur α$_{ENR}$ et l'enrichissement réel comme représenté en figure 4 (pour des enrichissements allant de 1 % à 85 %).

On constate, d'après cette figure que, lorsque le bruit de fond est soustrait du spectre avant le calcul de l'indicateur α$_{ENR}$, ce dernier présente une bonne sensibilité sur toute la plage d'enrichissement et sans ambigüité sur l'estimation de l'enrichissement pour une valeur de α$_{ENR}$ donnée (relation bijective).

Lorsque le bruit de fond n'est pas soustrait des régions d'énergie pour le calcul de l'indicateur α$_{ENR}$, le graphique de la figure 5 est obtenu, qui représente l'évolution de α$_{ENR}$ en fonction de l'enrichissement. Cette figure montre que, sans soustraction du bruit de fond, l'indicateur n'est pas adapté à l'estimation de l'enrichissement car la sensibilité de celui-ci est très faible, avec un écart maximal d'environ 0,035 entre les valeurs minimales et maximales de α$_{ENR}$ qui évolue entre 0,45 et 0,49 approximativement (soit moins de 10 % de variation relative alors que l'enrichissement évolue sur une plage de 1 % à 85 %). De plus, certaines valeurs de l'indicateur α$_{ENR}$ peuvent donner plusieurs valeurs d'enrichissement (relation non bijective au-delà de 40 % d'enrichissement environ) ; . On soustrait donc le bruit de fond avant le calcul de l'indicateur.

Par exemple, l'estimation de l'enrichissement $^{235}$U/$^{238}$U par la lecture des sous-bandes d'énergie A1 et A2 permet de différencier une contamination peu enrichie (0 à 20 %) d'une contamination hautement enrichie (plus de 20 %).

Comme expliqué ci-dessus, une caractérisation du bruit de fond émis par le matériau, par exemple le béton, de l'installation inspectée permet une meilleure estimation des taux de comptage nets dus à la contamination dans les bandes d'énergie. Le bruit de fond pouvant varier en fonction des teneurs U, K et Th dans divers matériaux, par exemple les matériaux constitutifs du béton (ciment, sable, granulats), et de la concentration de radon dans l'air ambiant (cette dernière est dépendante des conditions météorologiques), deux méthodes d'estimation sont possibles, décrites ci-dessous.

Selon une première méthode, il est possible d'estimer une moyenne des taux de comptage de bruit de fond à basse énergie à partir de plusieurs spectres gamma de bruit de fond acquis sur un objet non contaminé, par exemple une ou des zone(s) certifiée(s) non contaminées, mais représentatif de l'objet ou de la zone à contrôler (c'est-à-dire sur la même installation), car il peut exister des fluctuations des teneurs en uranium, thorium et potassium, notamment dans le béton.

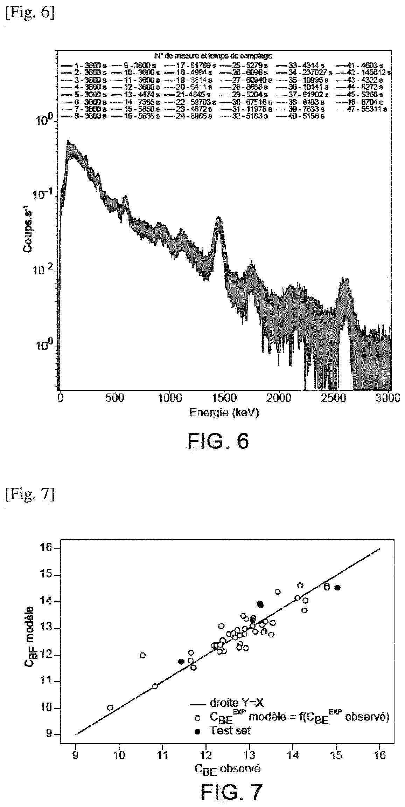

A titre d'illustration, l'acquisition de 47 spectres de bruit de fond du béton d'une installation a permis d'estimer une valeur moyenne des taux de comptage du BDF à basse énergie comme présenté sur la figure 6. En haut de cette figure sont indiqués le numéro de chaque mesure et le taux de comptage correspondant. A partir de ces différents spectres, on peut déduire une moyenne de 12,9 c/s avec une incertitude (écart-type) de 1,0 c/s soit une incertitude relative de 8 %. De manière générale, ce type d'étude préliminaire peut donc être réalisé sur n'importe quel site à contrôler.

Selon une deuxième méthode, on exploite les différents spectres de BDF, par exemple ceux de la figure 6, pour établir, par régression multilinéaire, un modèle qui permet de déterminer le BDF du spectre gamma d'une zone contrôlée à partir de bandes d'énergie, par exemple B$_1$, B$_2$ etc, où la contribution d'une possible contamination en uranium est négligeable, par exemple au-dessus de 220 keV. En utilisant les comptages bruts dans des zones susceptibles de caractériser les trois contributions naturelles au BDF gamma (par exemple autour de la raie de 609 keV pour l'uranium, de la raie de 1460 keV pour le $^{40}$K ; la contribution du $^{232}$Th autour de la raie de 2614 keV n'est pas prise en compte explicitement dans le modèle mais indirectement par le biais des deux zones précédentes, car alors le modèle donne une meilleure justesse et un écart type plus faible sur le bruit de fond estimé, le $^{232}$Th ayant une contribution dans la zone à 609 keV par le biais de la raie à 583 keV du $^{208}$Tl, un descendant dans la chaine du $^{232}$Th), on obtient

par régression, avec la méthode des moindres carrés, une expression de la forme :

[MATH 2]

$$C_{BDF\,[50-150]} = a_{609} \times C_{[550-660]} + a_{1460} \times C_{[1300-1600]} + a_0$$

où $C_{[550-660]}$ et $C_{[1300-1600]}$ sont, respectivement, les taux de comptage bruts dans les zones spectrales autour de 609 keV (région de l'$^{238}$U naturel) et autour 1460 keV (région du $^{40}$K). Dans cette étude préliminaire du BDF on s'intéressait à une bande d'énergie de 50 à 150 keV plutôt qu'à celles considérées ci-dessus, mais le principe d'estimation du BDF est le même, notamment pour les bandes « d'enrichissement » entre 50-130 keV et 165-215 keV. Le calcul par régression multilinéaire permet, à partir de données expérimentales (ici les 47 spectres de BDF de la figure 6), de trouver les constantes $a_{609}$, $a_{1460}$ et $a_0$ de façon à diminuer l'écart entre les valeurs de $C_{BDF\,[50-150]}$ calculées par la formule précédente et les valeurs de $C_{BDF\,[50-150]}$ issues de l'expérience ; autrement dit, les comptages pour le BDF dans les régions à basse énergie peuvent être estimés à partir de comptages dans des régions à plus haute énergie :ce sont les raies de haute énergie qui induisent, par effet de diffusion Compton, le continuum du spectre notamment à basse énergie.

Pour tester la méthode, on a scindé l'échantillon des 47 spectres en un sous-échantillon de 42 spectres pour l'apprentissage du modèle et 5 spectres pour le test, tirés aléatoirement. En sortie, on obtient le graphique de la figure 7, qui permet une comparaison des points expérimentaux ($C_{BDF\,[50-150]}$ observé) et des points calculés par le modèle ($C_{BDF\,[50-150]}$ modèle).

La figure 7 montre que, avec ce modèle, les valeurs calculées se rapprochent des valeurs expérimentales (distribution des points proche de la droite Y=X). Les coefficients sont $a_{609}$ = 5,4, $a_{1460}$ = 5,0 et $a_0$ = - 8,8 c/s et l'incertitude associée à $C_{BDF\,[50-150]}$ est de 0,4 c/s. On peut noter qu'elle est plus petite qu'avec la première approche utilisant la moyenne (incertitude de 1 c/s). L'approche par régression (par exemple par apprentissage automatique) donne de meilleurs résultats que la 1ère (simple moyenne).

A partir de modèles de régression similaires, on peut estimer le bruit de fond dans chacune des régions d'intérêt pour l'estimation de l'enrichissement $^{235}$U/$^{238}$U (voir ci-dessus, en lien avec la figure 3) et déduire les quantités $C_{BDF\,[50-130]}$ et $C_{BDF\,[165-215]}$. L'équation permettant de calculer l'indicateur $\alpha_{ENR}$ devient alors :

[MATH 3]

$$\alpha_{ENR} = \frac{C^{NET}_{[165-215]}}{C^{NET}_{[50-130]}} = \frac{C^{BRUT}_{[165-215]} - C^{BDF}_{[165-215]}}{C^{BRUT}_{[50-130]} - C^{BDF}_{[50-130]}}$$

$$= \frac{C^{BRUT}_{[165-215]} - (a_{609} \times C_{[550-660]} + a_{1460} \times C_{[1300-1600]} + a_0)}{C^{BRUT}_{[50-130]} - (b_{609} \times C_{[550-660]} + b_{1460} \times C_{[1300-1600]} + b_0)}$$

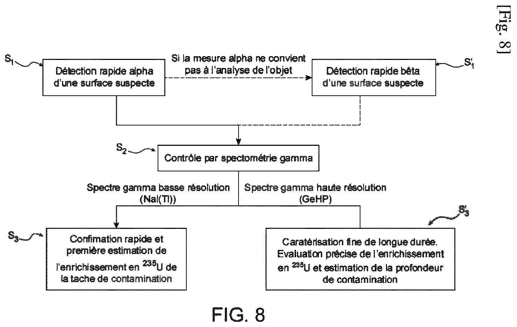

Des étapes d'un exemple de procédé selon l'invention sont données en figure 8. Un tel exemple de détection de contamination, par exemple sur les sols d'une installation, couple les méthodes de mesure alpha, bêta et gamma.

Préalablement, on peut par exemple avoir scanné tout ou partie d'un bâtiment avec détecteur(s) alpha ou bêta pour trouver où sont les zones suspectes. Le cas d'un sol donné ici n'est donc qu'un exemple parmi d'autres.

Selon une première étape, on effectue une détection rapide alpha (resp. béta) d'une surface suspecte, ou une mesure alpha (S1) ou bêta (S'1, si la mesure alpha ne convient pas) pour identifier les zones, par exemple les surfaces, contaminées ; cette étape peut être réalisée de manière systématique sur l'ensemble d'une installation.

Puis (étape S2), il est possible de réaliser une étape de contrôle par spectrométrie gamma.

Dans une troisième étape (S3), il est possible de réaliser un spectre gamma basse résolution, conformément à la présente invention, qui donne une confirmation rapide d'une première estimation de l'enrichissement en $^{235}$U de la tache de contamination.

En variante (étape S'3), ou en plus, il est possible de réaliser, par spectrométrie gamma à haute résolution (avec un détecteur au germanium) une caractérisation fine, de longue durée, ainsi qu'une évaluation précise l'enrichis-

sement en $^{235}$U une estimation de la profondeur de contamination.

Autrement dit, la présente invention met principalement en oeuvre une technique de spectrométrie gamma à basse résolution, mais peut être couplée :

- à des compteurs alpha et bêta pour une première détection d'une contamination uranium ;

- et/ou éventuellement à une mesure par spectrométrie gamma haute résolution pour une caractérisation plus fine.

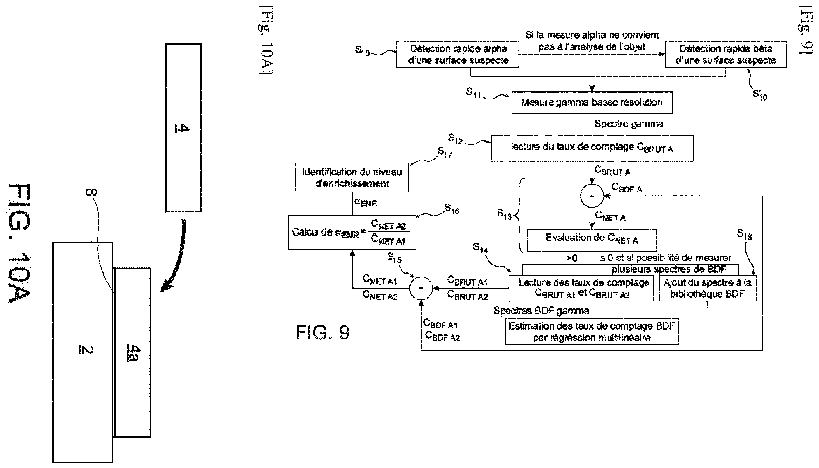

La figure 10A représente une 1$^{ère}$ variante d'un procédé selon l'invention, pour laquelle un compteur 4a, alpha ou beta, est utilisé, pour faire une première mesure d'une contamination 8 en surface d'un volume 2, puis un scintillateur 4 tel que décrit ci-dessus (par exemple un détecteur NaI) est utilisé pour effectuer une deuxième mesure, selon la présente invention.

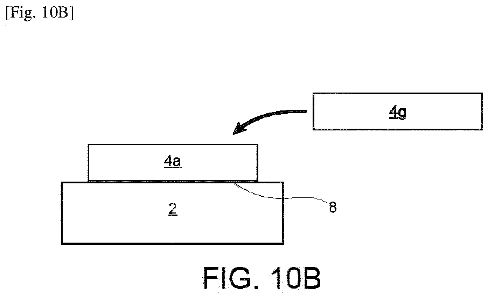

La figure 10B représente une 2$^{ème}$ variante d'un procédé selon l'invention, pour laquelle un scintillateur 4 tel que décrit ci-dessus (par exemple un détecteur NaI) est d'abord utilisé pour effectuer, selon la présente invention, une première mesure d'une contamination 8 en surface d'un volume 2, puis un compteur 4g gamma à haute résolution et utilisée, pour faire une deuxième mesure.

Il est possible de combiner le schéma de la figure 10A avec celui de la figure 10B, une mesure par un procédé selon l'invention étant précédée d'une mesure par un compteur 4a alpha ou bêta (figure 10A), et suivie d'une mesure par un compteur gamma 4g (figure 10B).

Etant donné que les mesures alpha et bêta sont plus sensibles que la mesure gamma (sauf état de surface de l'objet ou profil de contamination défavorable comme dans le cas d'une contamination en profondeur, ou lorsque l'enrichissement en $^{235}$U de la contamination est élevé pour la mesure bêta), les mesures alpha et bêta peuvent être employées pour une recherche préliminaire rapide (de l'ordre de la seconde) de contamination.

Une fois qu'une contamination est identifiée, une mesure gamma NaI(Tl), de durée un peu plus importante (de l'ordre de la minute), peut être réalisée. A partir de ce spectre gamma et d'une soustraction du bruit de fond comme expliqué précédemment, on peut confirmer la présence d'une contamination avec le comptage net $C_{NET\,A}$ dans une bande spectrale A (par exemple 50 keV - 220 keV) et on peut calculer un indicateur d'enrichissement $\alpha_{ENR}$ à partir des comptages nets $C_{NET\,A1}$ et $C_{NET\,A2}$ dans 2 sous bandes A1 (par exemple 50 keV - 130 keV) et A2 (par exemple 165 keV -215 keV) de la bande A.

Des étapes détaillées d'un exemple d'un tel procédé selon l'invention sont données en figure 9. Là encore, on peut avoir préalablement scanné tout ou partie d'un bâtiment avec détecteur(s) alpha ou bêta pour trouver où sont les zones suspectes. Le cas d'un sol donné ici n'est donc qu'un exemple parmi d'autres.

Les étapes de la figure 9 sont décrites ci-dessous :
Les étapes S10, S'10 et S11 correspondants étapes S1, S'1 et S2 décrites ci-dessus.

Il est ensuite possible (étape S12) de lire le taux de comptage dans la région à basse énergie $C_{BRUT\,A}$ puis (étape S13) de soustraire le bruit de fond $C_{BDF\,A}$ pour obtenir $C_{NET\,A}$. $C_{BDF\,A}$ correspond au taux de comptage brut de bruit de fond estimé par exemple par un modèle de régression linéaire à partir de spectres expérimentaux de BDF qui peuvent avoir été acquis au préalable.

Si $C_{NET\,A}$ est positif, une contamination est présente puisque la valeur obtenue après soustraction du bruit de fond est le surplus de coups détectés, dû à la présence de contamination.

Dans ce cas (étape S14), une lecture des taux de comptage $C_{BRUT\,A1}$ et $C_{BRUT\,A2}$ est effectuée dans les sous-bandes A1 et A2 autour des raies caractéristiques de contamination.

Puis (étape S15), on peut obtenir les taux de comptage $C_{NET\,A1}$ et $C_{NET\,A2}$ après soustraction des comptages du BDF $C_{BDF\,A1}$ et $C_{BDF\,A2}$ lesquels peuvent avoir été estimés comme expliqué précédemment, par exemple par des modèles de régression linéaire à partir de spectres expérimentaux de BDF antérieurement mesurés.

Puis (étape S16) à partir de ces taux de comptage nets, l'indicateur $\alpha_{ENR}$ est calculé et le pourcentage massique d'enrichissement $^{235}$U/$^{238}$U est déduit (étape S17) à partir d'une courbe d'étalonnage $^{235}$U/$^{238}$U = f($\alpha_{ENR}$) préétablie par simulation numérique, par exemple telle que la courbe de la figure 4.

Si $C_{NET\,A}$ (tel que calculé à l'étape S13) est inférieur ou égal à zéro (il est à noter qu'avec les fluctuations statistiques des comptages, et dans la mesure où on soustrait le BDF, on peut avoir un comptage net négatif s'il n'y a pas de contamination (ou une contamination très faible), aucune contamination n'est détectée et le spectre obtenu correspond au bruit de fond naturel. Ce spectre peut donc être enregistré (étape S18) dans une bibliothèque dédiée aux spectres de bruit de fond acquis par exemple tout au long de l'inspection des sols de l'installation. Cette bibliothèque peut être exploitée au fur et à mesure qu'elle s'enrichit pour mettre à jour, par exemple par régression multilinéaire, les modèles permettant d'estimer, pour chaque spectre des futures zones à contrôler, les taux de comptage du BDF dans les régions d'intérêt à basse énergie (selon l'exemple pris ici : de 50 à 220 keV, par exemple encore de 50 à 130 keV et de 165 à 215 keV) à partir des comptages bruts dans les régions à plus haute énergie (par exemple de 550 keV à 660 keV et de 1300 keV à 1600 keV). Ceci permet de réduire l'incertitude liée à l'estimation de la contribution du bruit de fond et d'améliorer la sensibilité de détection d'une possible contamination, ainsi que la précision sur l'enrichissement de l'uranium en cas de contamination détectée. En variante le bruit de fond peut être obtenu par une ou des mesures sur un objet non contaminé mais contenant de l'uranium naturel en équilibre radioactif séculaire.

Les applications industrielles de l'invention sont larges avec notamment, par exemple, l'assainissement et le démantèlement d'installations de traitement de l'uranium (tels qu'une usine d'enrichissement, un atelier de fabrication de combustible ou un laboratoire de recherche-développement) ainsi que l'analyse de déchets radioactifs contenant de l'uranium (comme ceux issus des opérations l'assainissement et le démantèlement).

## Revendications

1. - Procédé de détection d'une contamination (8) en uranium artificiel d'un objet contenant de l'uranium naturel, comportant :

 a) - le positionnement d'au moins un scintillateur (4) sur l'objet à examiner,
 b) - la réalisation d'au moins un spectre de rayonnement gamma émis par l'objet à examiner,
 c) - la sélection d'une 1$^{ère}$ région spectrale ($A_1$) et d'une 2$^{ème}$ région spectrale ($A_2$) dudit spectre de rayonnement gamma,
 d) - la mesure d'un 1$^{er}$ taux de comptage net, sans bruit de fond, dans la 1$^{ère}$ région spectrale et d'un 2$^{ème}$ taux de comptage net, sans bruit de fond, dans la 2$^{ème}$ région spectrale,
 e) - l'estimation de l'enrichissement en $^{235}$U artificiel sur la base du 1$^{er}$ taux de comptage net et du 2$^{ème}$ taux de comptage net.

2. - Procédé selon la revendication 1 dans lequel le scintillateur a un volume compris entre 0,1 l et 10 l.

3. - Procédé selon l'une des revendications 1 ou 2, dans lequel le scintillateur est un détecteur NaI.

4. - Procédé selon l'une des revendications 1 à 3, dans lequel :

 - les 2 régions spectrales ($A_1$, $A_2$) ont des contributions différentes de l'$^{235}$U et de l'$^{238}$U ;
 - et/ou la 1$^{ère}$ région spectrale contient au moins une raie à 93 keV et la 2$^{ème}$ région spectrale contient au moins une raie à 185 keV ;
 - et/ou la 1$^{ère}$ région spectrale est située entre 50 keV et 150 keV et la 2$^{ème}$ région spectrale est située entre 150 keV et 250 keV.

5. - Procédé selon l'une des revendications 1 à 4, dans lequel :

 - on réalise en outre une estimation du bruit de fond de la mesure, dans au moins la 1$^{ère}$ région spectrale et la 2$^{ème}$ région spectrale, les taux de comptage net étant calculés en prenant en compte ce bruit de fond, le bruit de fond étant par exemple estimé à partir d'un ou plusieurs spectres gamma acquis sur au moins un objet non contaminé, ou mémorisé(s) ;
 - et/ou le bruit de fond est estimé à partir de mesures dans des régions à plus haute énergie que la 1$^{ère}$ région spectrale et la 2$^{ème}$ région spectrale, par exemple des régions pour lesquelles la contribution d'une possible contamination en uranium est nulle ou inférieure à 1%.

6. - Procédé selon la revendication 5, le bruit de fond, dans au moins la 1$^{ère}$ région spectrale et la 2$^{ème}$ région spectrale, étant estimé à partir de mesures dans une région spectrale comprise entre 550 keV à 660 keV et dans une région spectrale comprise entre de 1300 keV à 1600 keV.

7. - Procédé selon l'une des revendications 1 à 6, comportant en outre :

 - une estimation du pourcentage massique d'enrichissement $^{235}$U/$^{238}$U à l'aide d'une courbe d'étalonnage ;
 - et/ou une étape préalable de détection par comptage alpha et/ou beta ;
 - et/ou une étape de détection gamma à haute résolution ;
 - et/ou, pour une contamination faible ou nulle, une étape de mémorisation d'au moins une partie des données du spectre.

8. - Procédé selon l'une des revendications 1 à 7, l'objet contenant en outre au moins du potassium et/ou du thorium.

9. - Procédé selon l'une des revendications 1 à 8, l'indicateur d'enrichissement étant obtenu par calcul du rapport entre le 1er taux de comptage et le 2ème taux de comptage.

10. - Dispositif de détection d'une contamination en uranium d'un objet contenant de l'uranium naturel, comportant :

a) - un scintillateur (4) ;
b) - des moyens (2) pour la réalisation d'au moins un spectre de rayonnement gamma émis par l'objet à examiner,
c) - des moyens (14) pour sélectionner une 1ère région spectrale et une 2ème région spectrale dudit spectre de rayonnement gamma,
d) - des moyens (14) adaptés pour estimer un 1er taux de comptage net, sans bruit de fond, dans la 1ère région spectrale et d'un 2ème taux de comptage net, sans bruit de fond, dans la 2ème région spectrale,
e) - des moyens (14) adaptés pour estimer un indicateur d'enrichissement en $^{235}$U sur la base du 1er taux de comptage net et du 2ème taux de comptage net.

11. - Dispositif selon la revendication 10, dans lequel le scintillateur :

- a un volume compris entre 0,1 l et 10 l ;
- et/ou comporte un détecteur NaI.

12. - Dispositif selon l'une des revendications 10 ou 11, dans lequel :

- la 1ère région spectrale contient au moins une raie à 93 keV et la 2ème région spectrale contient au moins une raie à 185 keV ;
- et/ou la 1ère région spectrale est située entre 50 keV et 150 keV et la 2ème région spectrale est située entre 150 keV et 250 keV.

13. - Dispositif selon l'une des revendications 10 à 12, comportant en outre :

- des moyens pour réaliser une estimation du bruit de fond de la mesure, dans au moins la 1ère région spectrale et la 2ème région spectrale, et des moyens pour corriger les taux de comptages sur la base de cette estimation du bruit de fond ;
- et/ou des moyens de mémorisation de données de spectres gamma de surfaces non contaminées.

14. - Dispositif selon l'une des revendications 10 à 13, comportant en outre :

- un détecteur alpha et/ou bêta et des moyens pour mettre en oeuvre une étape préalable de détection par comptage alpha et/ou beta ;
- et/ou un détecteur gamma à haute résolution.

15. - Dispositif selon l'une des revendications 10 à 14, l'indicateur d'enrichissement étant obtenu par calcul du rapport entre le 1er taux de comptage net et le 2ème taux de comptage net.

[Fig. 1A]

FIG. 1A

[Fig. 1B]

FIG. 1B

[Fig. 2]

FIG. 2

[Fig. 3]

FIG. 3

[Fig. 4]

FIG. 4

[Fig. 5]

FIG. 5

[Fig. 6]

FIG. 6

[Fig. 7]

FIG. 7

[Fig. 8]

FIG. 8

[Fig. 9]

Détection rapide bêta d'une surface suspecte — S'10

Si la mesure alpha ne convient pas à l'analyse de l'objet

Détection rapide alpha d'une surface suspecte — S10

Mesure gamma basse résolution — S11

Spectre gamma

lecture du taux de comptage $C_{BRUT\,A}$ — S12

$C_{BRUT\,A}$

$C_{BDF\,A}$

(-)

$C_{NET\,A}$

Evaluation de $C_{NET\,A}$ — S13

$\leq 0$ et si possibilité de mesurer plusieurs spectres de BDF

$> 0$

Ajout du spectre à la bibliothèque BDF — S18

Lecture des taux de comptage $C_{BRUT\,A1}$ et $C_{BRUT\,A2}$ — S14

Spectres BDF gamma

Estimation des taux de comptage BDF par régression multilinéaire

$C_{BRUT\,A1}$
$C_{BRUT\,A2}$

(-)

$C_{BDF\,A1}$
$C_{BDF\,A2}$

$C_{NET\,A1}$
$C_{NET\,A2}$ — S15

Calcul de $\alpha_{ENR} = \dfrac{C_{NET\,A2}}{C_{NET\,A1}}$ — S16

$\alpha_{ENR}$

Identification du niveau d'enrichissement — S17

FIG. 9

[Fig. 10A]

FIG. 10A

[Fig. 10B]

FIG. 10B

# EP 4 354 184 A1

## RAPPORT DE RECHERCHE EUROPEENNE

**Europäisches Patentamt**
**European Patent Office**
**Office européen des brevets**

**Numéro de la demande**

**EP 23 20 2980**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MELESHENKOVSKII I ET AL: "Determination of the uranium enrichment without calibration standards using a 2 x 2 inch LaBr3(Ce) room temperature detector and Monte Carlo sampling approach for uncertainty assessment", THE EUROPEAN PHYSICAL JOURNAL PLUS, SPRINGER BERLIN HEIDELBERG, BERLIN/HEIDELBERG, vol. 133, no. 12, 31 décembre 2018 (2018-12-31), pages 1-19, XP036663179, DOI: 10.1140/EPJP/I2018-12363-8 | 1,2,5-7, 9-11,13, 15 | INV. G01T1/167 G01T1/36 |
| Y | * 5. Conclusions * <br> * 4.1 Deriving the net peak areas * <br> * 4.2 Posterior distribution of the enrichment values * <br> ----- | 3,4,8, 12,14 | |
| Y | HOFSTETTER K J ET AL: "Uranium detection using small scintillators in a maritime environment", JOURNAL OF RADIOANALYTICAL AND NUCLEAR CHEMISTRY, AKADEMIAI KIADO RT, HU, vol. 276, no. 2, 1 mai 2008 (2008-05-01), pages 433-439, XP037848687, ISSN: 0236-5731, DOI: 10.1007/S10967-008-0523-Z [extrait le 2008-05-04] * page 433, dernier alinéa * * figure 1 * <br> ----- <br> -/-- | 3,4,12 | **DOMAINES TECHNIQUES RECHERCHES (IPC)** <br><br> G01T |

Le présent rapport a été établi pour toutes les revendications

| Lieu de la recherche | Date d'achèvement de la recherche | Examinateur |
|---|---|---|
| La Haye | 8 février 2024 | Wulveryck, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 23 20 2980

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | DUFOUR N ET AL: "Measurement of low-activity uranium contamination by gamma-ray spectrometry for nuclear decommissioning", NUCLEAR INSTRUMENTS & METHODS IN PHYSICS RESEARCH. SECTION A, ELSEVIER BV * NORTH-HOLLAND, NL, vol. 951, 28 octobre 2019 (2019-10-28), XP085934577, ISSN: 0168-9002, DOI: 10.1016/J.NIMA.2019.162976 [extrait le 2019-10-28] * 1. Introduction * ----- | 14 | |
| Y | MARCHAIS THOMAS ET AL: "Low-Resolution Gamma Spectrometry of Uranium Ores to Determine U Concentration and U/Rn Imbalance", IEEE TRANSACTIONS ON NUCLEAR SCIENCE , vol. 69, no. 4 1 avril 2022 (2022-04-01), pages 761-767, XP055915165, USA ISSN: 0018-9499, DOI: 10.1109/TNS.2021.3129343 Extrait de l'Internet: URL:https://ieeexplore.ieee.org/stampPDF/g etPDF.jsp?tp=&arnumber=9620038&ref= * II. Gamma spectrum analysis with two energy bands * ----- | 8 | |
| A | US 2013/297228 A1 (CHO SUK JU [KR] ET AL) 7 novembre 2013 (2013-11-07) * alinéas [0002], [0016] - [0019] * ----- | 1-15 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 8 février 2024 | Wulveryck, J |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 20 2980

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-02-2024

| Document brevet cité au rapport de recherche | Date de publication | Membre(s) de la famille de brevet(s) | Date de publication |
|---|---|---|---|
| US 2013297228 A1 | 07-11-2013 | KR 101212063 B1<br>US 2013297228 A1 | 13-12-2012<br>07-11-2013 |

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- FR 3104739
- WO 2021122772 A

**Littérature non-brevet citée dans la description**

- **I.MELESHENKOVSKII et al.** *EuR.Phys.J.plus,* 2018, vol. 133, 554
- **DE DUFOUR et al.** *Nuclear inst. And Methods in Physics Research, A,* 2019, vol. 951, 162976
- **DE MELESHENKOVSKII et al.** *EuR.Phys.J.plus,* 2018, vol. 133, 554
- **DUFOUR et al.** *Nuclear inst. And Methods in Physics Research, A,* 2019, vol. 951, 162976